# EUROPEAN PATENT SPECIFICATION

(11) **EP 1 133 576 B1**
(45) Date of publication and mention of the grant of the patent: **23.12.2009**
(21) Application number: 99956971.8
(22) Date of filing: 10.11.1999
(51) Int. Cl.: C21B 9/00, C22B 9/00, A01H 3/02, A01H 5/00, A01G 1/00

(54) **RECOVERING METALS FROM SOIL**
GEWINNUNG VON METALLEN AUS ERDREICH
RECUPERATION DE METAUX PRESENTS DANS DES SOLS

(30) Priority: 10.11.1998 US 107797 P; 23.11.1998 US 109443 P; 31.08.1999 US 386373
(43) Date of publication of application: 19.09.2001
(73) Proprietor: THE UNIVERSITY OF SHEFFIELD, Sheffield, South Yorkshire S10 2TN (GB); University of Maryland, College Park, Maryland 20742-9520 (US); The United States as represented by the Secretary of Agriculture, Beltsville, Maryland 20705 (US)
(72) Inventor: CHANEY, Rufus L., Beltsville, MD 20705 (US); ANGLE, Jay Scott, Ellicot City, MA 21042 (US); LI, Yin-Ming, Potomac, MD 20854 (US); BAKER, ALAN J.M. The Warden's House, Sheffield, S.Yorkshire S10 3EG (GB)
(74) Representative: Lind, Robert
(86) International application number: PCT/US1999/026443
(87) International publication number: WO 2000/028093

(56) References cited:
- US-A- 5 711 784
- US-A- 5 785 735
- US-A- 5 917 117
- US-A- 5 927 005
- US-A- 5 928 406
- US-A- 5 944 872
- RASKIN ET AL.: 'Bioconcentration of Heavy Metals by Plants' CURRENT OPINION IN BIOTECHNOLOGY vol. 5, 1994, pages 285 - 290, XP002922961
- ROMERO ET AL.: 'Metal Plant and Soil Pollution Indexes' WATER, AIR AND SOIL POLLUTION vol. 34, no. 4, 1987, pages 347 - 352, XP002922962
- KUMAR ET AL.: 'Phytoextraction: The Use of Plants to Remove Heavy Metals from Soils' ENVIRON. SCI. TECHNOL. vol. 29, no. 5, 1995, pages 1232 - 1238, XP002922963
- ROBINSON ET AL.: 'Soil Amendments Affecting Nickel and Cobalt Uptake by Berkheya coddii: Potential Use for Phytomining and Phytoremediation' ANNALS OF BOTANY vol. 84, 1999, pages 689 - 694, XP002922964

## Description

### Field of the Invention

This invention pertains to methods for recovering metals, more particularly nickel and cobalt, from metal-rich soil using phytoextracting or phytomining techniques. Metals can be selectively extracted from soil by cultivating certain metal hyperaccumulating plants, such as *Alyssum* plants, on soil treated to adjust the pH. More particularly, a pH of at least about 6.3 is proposed for extraction from soil of nickel and/or cobalt.

### Related Art

Industrial practices such as mining, smelting and disposing of manufacturing wastes have increased the concentrations of toxic metals in the environment. For example, at many nickel mining and smelting sites, levels of nickel and cobalt in soil have become so high that few plants survive, resulting in severe disruption of local ecosystems. Once nickel and cobalt enter soil, their removal is difficult since they are relatively immobile and they do not degrade into less toxic substances. The size of the areas affected by smelter and mine wastes are usually so large that engineering methods of soil remediation, such as soil removal and replacement, are too expensive to be practical (Cunningham et al., "Phytoremediation of Contaminated Soils,"Trends Biotechnol. 13. 393-397 (1995)).

The ability of certain plants to grow in metal-containing or metal-contaminated soil, and to actively accumulate heavy metals in their tissues, has created an interest in using such plants to extract metals from soil. Growing plants, including crops, on contaminated soil to extract contaminants is referred to as phytoextraction. This method is particularly effective in arable contaminated soils because it causes little disruption or dispersal, while preserving soil fertility and landscapes.

Nickel is one of the most widely found, and technologically important metals. It is a natural constituent in all soils, being particularly high in concentration in certain types of soil and geological materials such as serpentine, lateritic serpentine, ultramafic and meteor-derived soils. Cobalt, another valuable metal, has chemical and geological characteristics very similar to nickel and is generally found in the same soils. Other metals that may be found in such soils include those of the platinum and palladium families such as palladium, rhodium, ruthenium, platinum, iridium, osmium and rhenium, and metals such as selenium, zinc and cadmium.

Sites containing serpentine, lateritic serpentine, ultramafic and meteor-derived soils and materials can be conventionally mined or cultivated with metal-accumulating plants. Using such plants to extract metals from mineralized (geogenic) soils is referred to as phytomining.

U.S. Patent No. 5,364,451 to Raskin et al., is directed to a method of remediating polluted soils at a reduced cost. Raskin *et al*. remove metals from metal-rich soil by growing plants of the family Brassicaceae in the metal-rich soil. While Raskin *et al*. generally describe a variety of plants and a large number of metals that may be recovered, the examples mainly describe the recovery of chromium and lead from genetically altered plants. Thus, although promising, Raskin *et al*. offer little basis for an opportunity to proceed directly with soil phytomining or phytoextraction through plant growth or cultivation.

U.S. Patent No. 5,785,735 to Raskin et al., is also directed to methods of remediating polluted soils. Raskin *et al*. remove metals from metal-rich soil by growing crop and crop-related members of the plant family Brassicaceae in the metal-rich soil. The methods require the formation of a complex between the metal and a chelating agent added to the soil, the application of an electric field to the soil or a reduction in the pH of the soil. While Raskin *et al*. generally describe a variety of plants, the specification mainly describes the recovery of metals from genetically altered plants. Balancing of plant production and metal removal is proposed by reducing the pH of the soil to about 4.5 to 5.5.

Scientists recognize that increasing the pH of soil decreases the ability of farm crops to take-up heavy metals. U. S. Patent No. 5,711,784 to Chaney et al. also reflects the belief in the art that reducing the pH of the soil "increases the phytoavailability of nickel and cobalt." As disclosed by Chaney et al., a "reduced pH increases solubility, and optimizes the release of these metals for absorption by the roots and translocation to the above-ground tissues of the plant." However, reducing the pH of the soil also renders the metals more mobile and may allow for further contamination of the site. As hereinbefore indicated, cultivating plants which are hyperaccumulators of nickel and cobalt at at least about pH 6.3 is now proposed as a desirable alternative means for recovering such metals.

An article by Raskin et al. entitled 'Bioconcentration of Heavy Metals By Plants' in 'Current Opinion in Biotechnology' (1994) vol. 5, pages 285-290 also refers to phytomining of nickel and other metals, but again contains no teaching or suggestion of a pH range as now proposed.

### Summary of the Invention

Accordingly, this invention relates to improved systems for recovering nickel and/or cobalt by phytomining or phytoextracting soils rich in either or both of those metals.

The invention further relates to increasing nickel uptake by plants used in phytomining and phytoextraction by elevating the soil pH to at least about pH 6.3. Nickel is ultimately recovered from plant tissues at economically acceptable levels without further contaminating the nickel-containing site.

Thus in a first aspect the present invention provides a method for selectively increasing the amount of at least one first metal recovered from metal-containing soil, comprising: obtaining a soil pH of at least about 6.3 where the at least one first metal is nickel; or obtaining a soil pH between about 6.3 and about 7.0 where the at least one first metal is cobalt; and cultivating at least one metal-hyperaccumulator plant in the soil under conditions sufficient to permit the at least one plant to accumulate the at least one first metal from the soil in above-ground tissue..

The invention further relates to lowering the pH in soils prior or subsequent to nickel recovery to collect, for example, cobalt or any other metal present in the metalladen soil.

In a particular aspect of the invention, *Alyssum* plants are cultivated under favorable pH conditions to selectively accumulate certain metals relative to other metals.

The invention further relates to a method for selectively increasing the amount of at least one metal recovered from metal-containing soil comprising:
(a) elevating or lowering the pH of the soil;
(b) cultivating at least one metal-hyperaccumulator plant in the soil under conditions sufficient to permit said at least one plant to accumulate at least one metal from the soil in above-ground tissue;
(c) elevating the pH of the soil if the pH was lowered in step (a) or lowering the pH of the soil if the pH was elevated in step (a); and
(d) cultivating the at least one metal-hyperaccumulator plant in the soil under conditions sufficient to permit said at least one plant to accumulate at least one second metal from the soil in above-ground tissue, wherein at least nickel and/or cobalt are recovered at a soil pH of at least about 6.3 as discussed above.
   The invention further relates to a method for recovering nickel from nickel-containing soil comprising:

(a) elevating the pH of the soil to at least about 6.3;
(b) cultivating at least one nickel-hyperaccumulator plant in the soil under conditions such that at least 0.1 % of the above-ground tissue of said at least one plant, on a dry weight basis, is nickel;
(c) harvesting said at least one plant; and
(d) recovering nickel from said harvested plant.

The invention further relates to a method for recovering cobalt from cobalt-containing soil comprising:
(a) lowering the pH of the soil to a pH between about 6.3 and about 7.0;
(b) cultivating at least one cobalt-hyperaccumulator plant in the soil under conditions such that at least 0.1% of the above-ground tissue of said at least one plant, on a dry weight basis, is cobalt;
(c) harvesting said at least one plant; and
(d) recovering cobalt from said harvested plant.

New hyperaccumulating species of *Alyssum* have been identified; collected plants were screened by comparing nickel-uptake by the plants to nickel-uptake by the bench-mark nickel-hyperaccumulator *A. murale* 103. These new metal-hyperaccumulating species, cultivated on nickel-containing soil, accumulate nickel in above-ground tissue at a concentration of 1.55% or greater by weight based on the gross dry weight of the tissue.

Decontaminating metal-containing soil in accordance with the invention by cultivating at least one hyperaccumulator plant in the soil may result in the concentration of metal in the above-ground plant tissue of the at least one hyperaccumulator plant exceeding the concentration of metal in the soil by a factor of at least 2.

### Detailed Description of the Preferred Embodiments

In the present invention, it was discovered that certain metals can be selectively recovered from metal-rich soil using phytoextraction or phytomining techniques employing plants classified as hyperaccumulators of metals. By cultivating selected plants on metal-containing soil, the metals absorbed by the roots can be translocated to above-ground tissues, such as the stems, leaves, flowers and other leaf and stem tissues. This feature facilitates recovery of the metal extracted from the soil. Metal concentrations can be as high as about 5.0% in above-ground plant tissues, when leaves are included, which renders the metal recovery very economical. However, recovering metal in concentrations of less than about 5.0%, such as about 4.0%, 3.0%, 2.5%, 1.0% or 0.1 % remains useful. For example, a recovery of about 1.0% or more offers economic return for decontaminating polluted soil and for phytomining. A recovery of about 0.1 % to about 1.0% of cobalt is sufficient to decontaminate polluted soil at a low cost, and a recovery of even less than about 0.1% of some metals can still effectively decontaminate polluted soils.

As hereinbefore indicated, the invention further relates to a method for selectively increasing the amount of at least one metal recovered from metal-containing soil comprising:
(a) elevating or lowering the pH of the soil;
(b) cultivating at least one metal-hyperaccumulator plant in the soil under conditions sufficient to permit said at least one plant to accumulate at least one metal from the soil in above-ground tissue;
(c) elevating the pH of the soil if the pH was lowered in step (a) or lowering the pH of the soil if the pH was elevated in step (a); and
(d) cultivating the at least one metal-hyperaccumulator plant in the soil under conditions sufficient to permit said at least one plant to accumulate at least one second metal from the soil in above-ground tissue, wherein at least nickel and/or cobalt are recovered at a soil pH of at least about 6.3 as discussed above.

The invention further relates to a method for recovering nickel from nickel-containing soil comprising:
(a) elevating the pH of the soil to at least about 6.3;
(b) cultivating at least one nickel-hyperaccumulator plant in the soil under conditions such that at least 0.1 % of the above-ground tissue of said at least one plant, on a dry weight basis, is nickel;
(c) harvesting said at least one plant; and
(d) recovering nickel from said harvested plant.

The invention further relates to a method for recovering cobalt from cobalt-containing soil comprising:
(a) lowering the pH of the soil to a pH between about 6.3 and about 7.0;
(b) cultivating at least one cobalt-hyperaccumulator plant in the soil under conditions such that at least 0.1 % of the above-ground tissue of said at least one plant, on a dry weight basis, is cobalt;
(c) harvesting said at least one plant; and
(d) recovering cobalt from said harvested plant.

As also hereinbefore, indicated, new hyperaccumulating species of *Alyssum* have been identified; collected plants were screened by comparing nickel-uptake by the plants to nickel-uptake by the bench-mark nickel-hyperaccumulator *A. murale* 103. These new metal-hyperaccumulating species, cultivated on nickel-containing soil, accumulate nickel in above-ground tissue at a concentration of 1.55% or greater by weight based on the gross dry weight of the tissue.

Decontaminating metal-containing soil in accordance with the invention by cultivating at least one hyperaccumulator plant in the soil may result in the concentration of metal in the above-ground plant tissue of the at least one hyperaccumulator plant exceeding the concentration of metal in the soil by a factor of at least 2, preferably by a factor of 2, 3 or 4.

In one aspect of the invention, nickel is selectively accumulated by growing one or more nickel-hyperaccumulating plants in metal-rich, e. g., nickel-rich, soil and elevating the pH of the soil. The pH of the soil may be elevated before, during or after the plants are cultivated. Preferably, the pH is elevated prior to plant cultivation. Thus, the invention relates to the surprising discovery that raising the pH of the metal-rich soil favors nickel accumulation in plant tissue over other metals. The soil pH can then be lowered to selectively accumulate in the plant tissue other metals such as cobalt. As noted above, the pH for nickel extraction will be at least about 6.3, preferably ranging between about 6. 3 and about 7.0 when the soil is a serpentine soil or when the soil contains high iron oxide levels. The most preferred pH ranges from about 6.3 to about 6.7. However, when the iron oxide level is low, a more alkaline pH may be used.

Cobalt extraction is also affected by the soil chemistry. For example, the most preferred pH for cobalt extraction is about 5.5 when aluminum and/or manganese are present in the soil. For metal extraction in general, the preferred pH ranges between about 5.5 and about 7.0.

Soil pH can be raised and lowered with bases and acids. Such bases and acids may be either naturally occurring or synthetic. To raise the pH, bases such as limestone (calcitic (CaCO₃) or dolomitic (CaMgCO₃)), lime (CaO), hydrated lime (Ca(OH)₂), industrial, municipal or agricultural alkaline by-products that contain any of the above bases or a limestone equivalent, or the like can be used. The phrase "limestone equivalent" is intended to encompass bases that have the same alkalinity as limestone. To lower the pH, acids such as organic and inorganic acids can be used: Examples of such organic and inorganic acids include acetic acid, aqueous hydrogen chloride, aqueous sulfuric acid, sulfur, ammonium, urea-containing fertilizers, nitric acid, sulfide minerals, including, but not limited to, pyrite, and the like.

The amount of base or acid to add depends upon the existing pH of the soil and the soil chemistry. Methods used to determine the amount include, but are not limited to, adding acid or a base, such as CaCO₃, to the soil sample and measuring the resulting pH, then drawing a pH response curve to extrapolate the amount needed to obtain the desired pH.

After cultivation, the hyperaccumulator plant is harvested in a conventional fashion, i.e., by cutting the plant at soil level. The harvested materials are then left to dry in the field in the manner in which hay is dried. Alternatively, the harvested materials are dried in much the same fashion that alfalfa is dried, so as to remove most of the water present in the plant tissue by forced heated air drying. After drying, the plant tissue is collected by normal agricultural practices of hay-making, incinerated and reduced to an ash with or without energy recovery. Alternatively, the dried plant material may be hydrolyzed with concentrated acid to produce sugars and the metals recovered according to U.S. Patent Nos. 5,407,817, 5,571,703 and 5,779,164. The sugars may then be fermented to produce ethanol.
The resulting dried plant material may alternatively be further treated by known roasting, sintering or smelting methods which allow the metals in the ash or ore to be recovered according to conventional metal refining methods such as acid dissolution and electrowinning.

Conventional smelting, roasting and sintering temperatures from about 260°C to about 1000°C are sufficient to combust the dried plant material to oxidize and vaporize the organic material present and to prevent dioxin accumulation during incineration. The preferred temperature is sufficient to remove the organic carbon to free the ash. The most preferred temperature is about 1000°C. The process leaves a residue of the accumulated metal with few contaminants known to interfere with metal refining. Further, it is expected that the concentration of other components in the ash will be much lower than with conventional mined ore concentrates. For example, serpentine laterite ores generally contain over 10,000 ppm (1%) Fe whereas a biomass obtained using phytomining techniques only contains about 100-500 ppm (0.01 - 0.05%) Fe.

By definition, nickel-hyperaccumulating plants accumulate at least about 1000 mg of nickel per 1 kg dry weight of plant tissue (obtained from a plant grown in soil where the plant naturally occurs). Similarly, cobalt-hyperaccumulating plants are defined as plants that accumulate at least about 1000 mg of cobalt per 1 kg dry weight of plant tissue (obtained from a plant grown in soil where the plant naturally occurs). However, zinc- and manganese-hyperaccumulators are defined as plants that accumulate at least about 10,000 mg of zinc and manganese, respectively, per 1 kg dry weight of plant tissue (obtained from a plant grown in soil where the plant naturally occurs). Finally, cadmium-hyperaccumulators are defined as plants that accumulate at least about 100 mg cadmium per 1 kg dry weight of plant tissue (obtained from a plant grown in soil where the plant naturally occurs).
By screening a wide variety of plants, those of the *Alyssum* genus (Brassicaceae family) have been identified as hyperaccumulators ofnickel. These plants also naturally accumulate cobalt and may accumulate metals such as Zn, Mn and Cd, and metals from the platinum and palladium families including Pd, Rh, Ru, Pt, Ir, Os and Re.
More specifically, plants which naturally concentrate nickel in above-ground tissues and generally exhibit an enhanced uptake of cobalt and other metals include members of the section Odontarrhena of the genus *Alyssum.* The metals accumulate in nickel-hyperaccumulating *Alyssum* plant species when the plants are grown in contaminated soils. Some 48 taxa within the section Odontarrhena of the genus *Alyssum* are known to be hyperaccumulators of nickel. These include the following species: *A. akamasicum, A. alpestre, A. anatolicum, A. callichroum, A. cassium, A. chondrogynum, A. cilicicum, A. condensatum, A. constellatum, A. crenulatum, A. cypricum, A. davisianum, A. discolor, A. dubertretii,A. eriophyllum,A. euboeum, A. floribundum, A. giosnanum,A. hubermorathii, A. janchenii, A. markgrafii, A. masmenaeum, A. obovatum, A. oxycarpum, A. penjwinensis, A. pinifolium, A. pterocarpum, A. robertianum, A. samariferum, A. singarense, A. smolikanum, A. syriacum, A. trapeziforme, A. troodii, A. virgatum, A. murale, A. pintodasilvae* (also known as *A. serpyllifolium var. lusitanicum*), *A. serpyllifolium, A. malacitanum* (also known as *A. serpyllifolium var. malacitanum*), *A. lesbiacum, A. fallacinum, A. argenteum, A. bertolonii, A. tenium, A. heldreichii, A. corsicum, A. pterocarpum* and *A. caricum* as well as newly discovered species such as *A. corsicum G16, A. murale G69* and *A. murale G82.* These species were deposited on November 6, 1998, under the provisions of the Budapest Treaty at the American Type Culture Collection, 10801 University Blvd., Manassas, VA 20110-2209, and assigned ATCC nos. 203436, 203437 and 203438, respectively.
Species of *Alyssum* that naturally accumulate nickel in amounts of up to 20% greater than any known *Alyssum* hyperaccumulator have been isolated. Species *A. murale G49, A. murale G54, A. murale G69* and *A. murale G82* isolated in Greece and species *A. corsicum G16* isolated in Turkey all accumulate nickel in amounts greater than the known species *A. murale 103* which accumulates nickel such that nickel makes up 1.14% by dry weight of a plant shoot from a test field of serpentine soil. The new hyperaccumulators accumulate nickel in amounts such that 1.55-1.60% by dry weight of the shoot is nickel. The results of nickel accumulation of these five new accumulators relative to the benchmark accumulator *A. murale 103* is shown in Example 4.
About 250 other plant taxa, including those of tropical origin, have been shown to accumulate quantities of nickel and other metals. However, many of these plants do not exceed about 10,000 mg of metal per kg of plant tissue dry weight. Other metal-accumulating plants includes species of the genus *Cyanotis* such as *Cyanotis longifolia*; species of the genus *Bulbostylis* such as *Bulbostylis mucronata*; species of the genus *Combretum* such as *Combretum decandrum*; species of the genus *Crassula* such as *C. alba, C. vaginata* and C. *argyrophylla;* species of the genus *Clethra* such as *Clethra barbinervis*; plants from the Cunoniaceae family such as species of the genus *Geissois* including *G*. *intermedia, G. magnifica, G. montana, G. pruinosa, G. trifoliata* and *G. racemosa*; species of the genus *Argophyllum*; members of Brassicaceae family such as species of the genus *Thlaspi* such as *Thlaspi caerulescens, Thlaspi montanum var. montanum* and *Thlaspi montanum var. siskiyouense*; species of the genus *Serpentine* such as *Serpentine polygaloides*; species of the genus *Sebertia* such as *Sebertia acuminata*; species of the genus *Hybanthus* such as *Hybanthus floribundas*; species of the genus *Psychotria* such as *Psychotria douarrei*; species of the genus *Rinorea* such as *Rinorea bengalensis*; species of the genus *Pearsonia* such as *Pearsonia metallifera*; species of the genus *Sebertia* such as *Sebertia acuminata*; and species of the following genera: *Homalium, Myristica, Trichospermum, Planchonella* and *Peltaria*. Additional plants include, but are not limited to, *Streptanthus polygaloides, Berkheya coddii, Phyllanthus palawanensis, Dichapetalum gelonioides ssp. tuberculatum* and *Stackhousia tryonii*.

Additional metal hyperaccumulators are listed below:
ACANTHACEAE
   *Blepharis acuminata, Justicia lanstyakii, Lophostachys villosa, Phidiasia lindavii, Ruellia geminiflora*
ADIANTACEAE
   *Adiantum sp.*
ANACARDIACEAE
   *Rhus wildii*
ASTERACEAE
   *Berkheya coddii, Chromolaena* sp. cf. meyeri, Dicoma niccolifera, Gochnatia crassifolia, *G. recurva, Koanophyllon grandiceps, K. prinodes, Leucanthemopsis alpina, Pentacalia, Senecio Senecio pauperculus, Shafera platyphylla, Solidago hispida*
BORAGINACEAE
   *Heliotropium* sp.
BRASSICACEAE
   *Bornmuellera, Cardamine resedifolia, Cochlearia aucheri, C. sempervivum, Peltaria emarginata, Streptanthus polygaloides*
BUXACEAE
   *Buxus*
CAMPANULACEAE
   *Campanula scheuchzeri, Arenaria, Minuartia laricifolia, M. verna*
CLUSIACEAE
   *Garcinia bakeriana, G. polyneura, G. revoluta, G. ruscifolia*
CONVOLVULACEAE
   *Merremia xanthophylla*
CUNONIACEAE
   *Pancheria engleriana*
DICHAPETALACEAE
   *Dichapetalum gelonioides* and ssp. *tuberculatum* and ssp. *andamanicum*
DIPTEROCARPACEAE
   *Shorea tenuiramulosa*
ESCALLONIACEAE
   *Argophyllum grunowii, A. laxum*
EUPHORBIACEAE
   *Baloghia* sp., *Bonania, Cleidion viellardii, Cnidoscolus* sp. cf. *bahianus, Euphorbia, Gymnanthes recurva, Leucocroton, Phyllanthus, Sapium erythrospermum, Savia*
FABACEAE
   *Anthyllis* sp., *Pearsonia metallifera, Trifolium pallescens*
FLACOURTIACEAE
   *Casearia silvana, Homalium, Xylosma*
JUNCACEAE
   *Luzula lutea*
MELIACEAE
   *Walsura monophylla*
MYRISTICACEAE
   *Myristica laurifolia*
MYRTACEAE
   *Mosiera araneosa, M ekmanii, M x miraflorensis, M ophiticola, Psidium araneosum, P. havanense*
OCHNACEAE
   *Brackenridgea palustris* and ssp. *foxworthyi* and ssp. *kjellbergii, Ouratea nitida, O. striata*
OLEACEAE
   *Chionanthus domingensis*
ONCOTHECACEAE
   *Oncotheca balansae*
POACEAE
   *Trisetum distichophyllum*
RANUNCULACEAE
   *Ranunculus glacialis*
RUBIACEAE
   *Ariadne shaferi* ssp. *shaferi* and ssp. *moaensis, Mitracarpus* sp., *Phyllomelia coronata, Psychotria clementis, P. costivenia, P. douarrei, P. glomerata, P. osseana, P. vanhermanii, Rondeletia*
SAPOTACEAE
   *Planchonella oxyedra, Sebertia acuminata*
SAXIFRAGACEAE
   *Saxifraga*
SCROPHULARIACEAE
   *Esterhazya* sp. and *Linaria alpina*
STACKHOUSIACEAE
   *Stackhousia tryonii*
TILIACEAE
   *Tetralix brachypetalus, T. cristalensis, T jaucoensis, T. moaensis, T. nipensis, Trichospermum kjellbergii*
TURNERACEAE
   *Turnera subnuda*
VELLOZIACEAE
   *Vellozia* sp.
VIOLACEAE
   *Agatea deplanchei, Hybanthus, Rinorea bengalensis, R. javanica, Rinorea* sp.
ACERACEAE
   *Acer pseudoplatanus*
BRASSICACEAE
   *Cardaminopsis halleri, Thlaspi avalanum, T. brachypetalum, T. caerulescens, T. ochroleucum, T rotundifolium* subsp. *cepaeifolium, T. praecox, T. stenopterum, T. tatrense*
CARYOPHYLLACEAE
   *Minuartia verna, Polycarpaea synandra*
CISTACEAE
   *Cistus incanus* ssp. *creticus*
DICHAPETALACEAE
   *Dichapetalum gelonioides*
PLUMBAGINACEAE
   *Armeria maritima* var. *halleri*
POACEAE
   *Agrostis stolonifera, A. tenuis, Arrhenatherum elatius, Festuca ovina*
POLYGONACEAE
   *Rumex acetosa*
VIOLACEAE
   *Viola calaminaria*
AMARANTHACEAE
   *Pandiaka metallorum, Celosia trigyna*
ASTERACEAE
   *Anisopappus chinensis, A. davyi, Gutenbergia pubescens, Millotia myosotidifoliab, Vernonia petersii*
CARYOPHYLLACEAE
   *Minuartia verna* ssp. *hercynica* and *Silene cobalticola*
COMMELINACEAE
   *Commelina zigzag* and *Cyanotis longifolia*
CONVOLVULACEAE
   *Ipomoea alpina*
CRASSULACEAE
   *Crassula alba* and *C. vaginata*
CYPERACEAE
   *Ascolepis metallorum, Bulbostylis cupricola, B. pseudoperennis*
EUPHORBIACEAE
   *Monadenium cupricola* and *Phyllanthus williamioides*
FABACAEAE
   *Crotalaria cobalticola* and *Vigna dolomitica*
IRIDACEAE
   *Gladiolus gregarius*
LAMIACEAE
   *Aeollanthus subacaulis* var. *linearis, A. homblei, A. saxatilis, A. subacaulis* var. *ericoides* and var. *linearis, Becium grandiflorum* var. *vanderystii, Haumaniastrum homblei, H. katangense, H. robertii, H. rosulatum*
MALVACEAE
   *Hibiscus rhodanthus*
PINACEAE
   *Abies balsamea*
POACEAE
   *Eragrostis racemosa, Rendlia altera, Sporobolus congoensis*
PTERIDACEAE
   *Actiniopteris* sp.
SCROPHULARIACEAE
   *Alectra sessiliflora* var. *senegalensis, Buchnera henriquesii, Crepidorhopalon tenuisa, C. perennisa, Sopubia mannii, S. metallorum, S. neptunii, Striga hermontheca*
TILIACEAE
   *Triumfetta dekindtiana, T. digitata, T. welwitschii* var. *descampii*
VELLOZIACEAE
   *Xerophyta retinervis* var. *equisetoides*
APOCYNACEAE
   *Alyxia rubricaulis*
CELASTRACEAE
   *Maytenus bureaviana, M. pancheriana, M. sebertiana*
CLUSIACEAE
   *Garcinia amplexicaulis*
MYRTACEAE
   *Eugenia clusioides*
PROTEACEAE
   *Beaupreopsis paniculata, Macadamia angustifolia, M. neurophylla*
ASTERACEAE
   *Haplopappus fremontii, Machaeranthera glabriuscula, M. ramosa, M. venusta*
BRASSICACEAE
   *Stanleya pinnata, S. bipinnata*
CHENOPODIACEAE
   *Atriplex confertifolia*
LECYTHIDACEAE
   *Lecythis ollaria*
LEGUMINOSAE
   *Acacia cana, Astragalus bisulcatus, A. osterhoutii, A. pattersonii, A. pectinatus, A. racemosus, Neptunia amplexicaulis*
RUBIACEAE
   *Morinda reticulata*
SCROPHULARIACEAE
   *Castilleja chromosa*

The metals accumulated include nickel, cobalt, barium, gold, beryllium, mercury, molybdenum, copper, arsenic, selenium, antimony, manganese, silver, thallium, tin, lead, rubidium, chromium, cerium, vanadium, cesium, uranium, plutonium, strontium, yttrium, technetium, iridium, ruthenium, palladium, rhodium, platinum, osmium, rhenium, zinc and cadmium.
Metal sequestration can be improved by optimizing soil calcium concentration, using ammonium-containing or ammonium-generating fertilizers rather than other nitrate-containing fertilizers, and by applying chelating agents to the soil in which the hyperaccumulator plants are grown.
*Alyssum* species which hyperaccumulate metals such as nickel and cobalt evolved in nickel-rich ultramafic and serpentine soils which have low soil calcium and a low Ca:Mg ratio. It is now known that the presence of extremely low and extremely high calcium concentrations in soil inhibits nickel hyperaccumulation by *Alyssum. See* PCT/US97/15109. Acceptable calcium concentrations in soil range from about 0.128 mM to about 5.0 mM. In terms of percentages, an acceptable calcium concentration in soil ranges from about 2% to about 80% of the exchangeable cations. A preferable range is from about 10% to about 80% of the exchangeable cations. The most preferred range is from about 30% to about 70% of the exchangeable cations. Such ranges can be achieved, if necessary, by adding calcium-containing agents to the soil such as limestone. In addition, gypsum could be added to the soil to raise the exchangeable calcium of the soil to benefit nickel accumulation.
The presence of intermediate concentrations of calcium, i.e., between about 0.128 mM and about 5.0 mM, increases nickel uptake whereas calcium values of about 0.128 mM and below, or about 5 mM and above, decrease nickel uptake. Combined with an exchangeable Ca:Mg ratio of between about 0.16 and about 0.40, much lower than recommended, an additional increase in nickel concentration in plant tissues is observed. By "exchangeable Ca:Mg ratio" is intended the ratio of extractable calcium and magnesium in the soil.
Although hyperaccumulators such as *Alyssum* have developed the ability to hyperaccumulate metals in above-ground tissues, fertilizer supportive of growth, particularly in polluted soil, can be used as an additive to increase hyperaccumulation. Ammonium fertilizers localize acidification adjacent to the root which aids hyperaccumulation of various metals such as Ni, Zn, Cd, Co, etc. The use of ammonium fertilizers *per se* is well-known, and acceptable fertilizers and protocols can be readily determined with no more than routine experimentation, by those of ordinary skill in the art. Other additives include, but are not limited to, nutrients such as phosphate which helps to maximize the yield of nickel, for example.

Another possible additive to the contaminated soil is a metal chelating agent. Metal chelates are commonly used in agriculture and occur naturally in living cells. The addition of chelating agents, such as nitrolotriacetic acid (NTA), **ethylenediaminetetraacetic acid (EDTA),** ethyleneglycol-bis-(p-aminoethylether-N, N-tetraacetic acid) or any of a variety of amino-acetic acids known to those of ordinary skill in the art as chelating agents, to the soil to be phytomined or phytoextracted improves the movement of soil metals to root surfaces for uptake and translocation into above-ground tissues. Preferred chelating agents are NTA or EDTA. Typically, chelating agents will be added at a concentration ranging from about 0.5 to about 10 millimoles per kg soil. As with the use of fertilizers, the optimum concentration of chelating agents can be readily determined with no more than routine experimentation. Chelating compounds which chelate nickel in the presence of high soil levels of Fe, Mg and Ca selectively increase nickel uptake by hyperaccumulator plants.

The following examples are illustrative, but not limiting, of the methods of the present invention. Other suitable modifications and adaptations of the variety of conditions normally encountered which are obvious to those skilled in the art are within the spirit and scope of the present invention.

### Examples

### Example 1

*A. murale 103* plants were grown in sets of two for 120 days in 19 pot-sets (4 L) of contaminated or serpentine soils (Mg-nitrate was leached out) without acidification, the first pot in a set, and with acidification, the second pot in a set. Water was maintained near field capacity by daily watering with deionized water. The plants were cultivated at a temperature of about 28°C during the day and about 20°C at night. The soils were acidified using nitric acid and the pH was raised using powdered reagent-grade CaCO₃. The soils included serpentine soils rich in nickel (containing from about 100 to about 5000 ppm nickel) obtained from southwest Oregon (soils 3-19), nickel-refinery contaminated Welland loam from Port Colborne, Ontario (soil 1) and nickel-refinery contaminated Quarry muck from Port Colborne, Ontario (soil 2). Fertilizers containing, *inter alia*, nickel, potassium, sulfur and phosphorous, were added to optimize plant growth.

Table 1 shows the results of the experiment in contaminated soil.

**Table 1**

| Soil | TRT | Final pH | Yield | Ni | Co | Mn | Zn | Cu | Fe |
|---|---|---|---|---|---|---|---|---|---|
| | | | g shoot dry matter/ pot | mg/kg | | | | | |
| 1 | 2 | 5.16 | 27.4 | 9150 | 119 | 82.4 | 117 | 15.0 | 58 |
| 1 | 6 | 4.96 | 22.7 | 4220 | 84.7 | 145.6 | 180 | 19.5 | 64 |
| 2 | 2 | 6.04 | 40.9 | 4570 | 5.9 | 20.9 | 99.0 | 4.0 | 68 |
| 2 | 6 | 5.40 | 28.8 | 2150 | 7.1 | 63.0 | 142 | 6.5 | 82 |
| 3 | 2 | 6.26 | 21.5 | 6370 | 19.9 | 68.8 | 61.5 | 3.5 | 160 |
| 3 | 6 | 5.38 | 19.7 | 6480 | 308 | 680 | 65.9 | 5.5 | 260 |
| 4 | 2 | 5.61 | 19.6 | 12400 | 56.5 | 181 | 88.0 | 4.0 | 332 |
| 4 | 6 | 5.21 | 15.6 | 8560 | 377 | 140 | 135 | 5.0 | 345 |
| 5 | 2 | 5.88 | 24.0 | 1860 | 6.0 | 53.0 | 252 | 3.2 | 137 |
| 5 | 6 | 5.32 | 21.1 | 1220 | 9.8 | 153 | 379 | 3.5 | 121 |
| 6 | 2 | 6.03 | 24.5 | 4580 | 14.6 | 84.2 | 61.2 | 5.2 | 183 |
| 6 | 6 | 5.42 | 27.2 | 5040 | 58.5 | 227 | 70.3 | 5.5 | 195 |
| 7 | 2 | 5.54 | 23.3 | 5750 | 36.3 | 134 | 83.7 | 5.0 | 250 |
| 7 | 6 | 5.28 | 23.2 | 4870 | 86.8 | 272 | 77.9 | 5.5 | 274 |
| 8 | 2 | 5.77 | 21.1 | 9630 | 28.8 | 130 | 52.6 | 4.0 | 223 |
| 8 | 6 | 5.21 | 17.5 | 7180 | 94.0 | 291 | 74.9 | 4.8 | 221 |
| 9 | 2 | 6.12 | 22.1 | 9770 | 38.7 | 122 | 69.6 | 4.8 | 240 |
| 9 | 6 | 5.62 | 22.5 | 9100 | 196 | 532 | 69.7 | 5.2 | 273 |
| 10 | 2 | 6.25 | 20.0 | 12900 | 31.2 | 109 | 79.3 | 2.5 | 318 |
| 10 | 6 | 5.76 | 19.3 | 11500 | 182 | 774 | 93.5 | 3.2 | 412 |
| 11 | 2 | 5.72 | 32.8 | 8460 | 37.3 | 148 | 75.5 | 5.0 | 266 |
| 11 | 6 | 5.35 | 24.3 | 6010 | 136 | 339 | 93.6 | 4.8 | 230 |
| 12 | 2 | 6.54 | 20.3 | 8070 | 29.0 | 84.4 | 74.0 | 3.5 | 222 |
| 12 | 6 | 5.78 | 18.4 | 8240 | 86.0 | 186 | 66.5 | 3.2 | 178 |
| 13 | 2 | 6.34 | 18.8 | 11000 | 16.2 | 39.1 | 51.8 | 2.2 | 186 |
| 13 | 6 | 5.87 | 19.6 | 9970 | 36.0 | 103 | 56.6 | 2.8 | 181 |
| 14 | 2 | 5.68 | 21.3 | 9150 | 67.0 | 331 | 65.8 | 4.8 | 278 |
| 14 | 6 | 4.84 | 13.3 | 5820 | 313 | 957 | 86.0 | 4.8 | 567 |
| 15 | 2 | 6.04 | 19.4 | 7620 | 30.5 | 142 | 69.8 | 4.8 | 365 |
| 15 | 6 | 5.94 | 23.7 | 6110 | 463 | 820 | 88.6 | 4.8 | 220 |
| 16 | 2 | 6.07 | 21.0 | 3090 | 47.4 | 128 | 89.1 | 6.8 | 172 |
| 16 | 6 | 5.41 | 18.2 | 3560 | 225 | 563 | 105 | 8.0 | 267 |
| 17 | 2 | 6.02 | 20.6 | 9080 | 37.5 | 124 | 114 4 | 3.8 | 256 |
| 17 | 6 | 5.63 | 23.9 | 7940 | 262 | 973 | 127 | 4.2 | 252 |
| 18 | 2 | 5.99 | 19.4 | 11600 | 35.3 | 127 | 68.5 | 3.0 | 440 |
| 18 | 6 | 5.53 | 15.4 | 9500 | 204 | 908 | 116 | 4.2 | 548 |
| 19 | 2 | 5.59 | 21.8 | 436 | 19.1 | 259 | 92.4 | 7.8 | 190 |
| 19 | 6 | 5.11 | 19.5 | 584 | 72.4 | 929 | 112 | 8.8 | 156 |

| | | | | | | | | | |
|---|---|---|---|---|---|---|---|---|---|
| "TRT" = treatment. In treatment 2, the soil pH was not adjusted. In treatment 6, the soil pH was acidified. | | | | | | | | | |

As illustrated in Table 1, the plants grown on soils of less acidic pH generally accumulated far greater amounts of nickel than the plants grown on more acidic soils. In addition, plants taking up larger amounts of nickel on less acidic soils accumulated smaller amounts of other metals such as cobalt, manganese and zinc which are commonly found in lower concentrations in shoots after soil pH is raised.

### Example 2

To validate the above example and to obtain optimization, *Alyssum* plants were grown on nickel-refinery contaminated Welland loam (soil 1), wherein the pH was elevated by applying limestone (Table 2). The plants were also grown on nickel-refinery contaminated Quarry muck (soil 2) and serpentine soils (soils 3-11) (Table 3). The same cultivation conditions recited in Example 1 were used in Example 2.

**Table 2**

| Effect of phosphate, pH and Ca:Mg variation on geometric mean shoot yield and micronutrient composition of two *Alyssum* species grown on nickel-refinery contaminated Welland loam (soil 1) for 120 days. | | | | | | |
|---|---|---|---|---|---|---|
| Soil | TRT | Yield | Ni | Co | Mn | Zn |
| | | g/pot | g/kg | mg/kg | mg/kg | mg/kg |
| 1 | 1 | 6.68 b* | 7.61 a | 127 a | 23.7 e | 157 fg |
| Phosphate Series: | | | | | | |
| 1 | 3 | 7.82 ab | 5.94 bc | 118 ab | 72.8 c | 209 ab |
| 1 | 2 | 9.78 ab | 5.49 cd | 109 bcd | 59.3 d | 170 def |
| 1 | 4 | 8.71 ab | 6.40 b | 114 a-d | 66.7 cd | 178 c-f |
| 1 | 5 | 8.03 ab | 5.97 bc | 98.8 d | 60.8 cd | 169 def |
| pH Series: | | | | | | |
| 1 | 6 | 8.14 ab | 3.93e e | 132a a | 177a a | 217a a |
| 1 | 7 | 7.46 ab | 4.93 d | 119 ab | 99.8 b | 183 b-e |
| 1 | 2 | 9.78 ab | 5.49 cd | 109 bed | 59.3 d | 170 deg |
| 1 | 8 | 10.4a a | 8.47 a | 101 cd | 19.1 f | 142 g |
| Ca:Mg Series: | | | | | | |
| 1 | 9 | 9.22 ab | 6.10 bc | 119 ab | 67.3 cd | 168 ef |
| 1 | 2 | 9.78 ab | 5.49 cd | 109 bcd | 59.3 d | 170 def |
| 1 | 10 | 7.80 ab | 5.55 cd | 117 abc | 64.7 cd | 198 abc |
| 1 | 11 | 8.72 ab | 5.85 bc | 120 ab | 69.8 cd | 195 a-d |

| | | | | | | |
|---|---|---|---|---|---|---|
| *a-g indicate means followed by the same letter are not significantly different at the P < 0.05 level according to the Duncan-Walker K-ratio t-test. "TRT" = treatment | | | | | | |

**Table 3**

| Effect of soil treatments on soil pH and micronutrient composition of *Alyssum murale* and *Alyssum corsicum* grown on nickel-refinery contaminated Welland loam (soil 1), nickel-refinery contaminated Quarry muck (soil 2) and serpentine soils (soils 3-11) for 120 days. | | | | | | | | |
|---|---|---|---|---|---|---|---|---|
| Soil | TRT | Final pH | Cu | Zn | Co | Ni | Mn | Fe |
| | | | mg/kg | mg/kg | mg/kg | g/kg | mg/kg | mg/kg |
| 1 | | 5.47 | 11.0 | 156 | 136 | 8.13 | 39.2 | 67.6 |
| Phosphate Series (phosphate added to the soil in kg/ha by the addition of phosphate-containing fertilizer): | | | | | | | | |
| 3 | 0 P | 5.23 | 15.0 | 179 | 99.1 | 7.58 | 56.2 | 49.6 |
| 2 | 100 P | 5.18 | 16.0 | 131 | 102 | 7.34 | 59.7 | 50.1 |
| 4 | 250 P | 5.24 | 14.5 | 133 | 82.2 | 7.37 | 56.8 | 56.4 |
| 5 | 500 P | 5.13 | 14.5 | 129 | 73.8 | 6.50 | 53.1 | 50.8 |
| pH Series (soil was acidified using nitric acid for "Lo pH" and "MLo pH"): | | | | | | | | |
| 6 | Lo pH | 4.99 | 19.2 | 192 | 91.0 | 4.16 | 129 | 53.1 |
| 7 | MLo pH | 5.18 | 16.8 | 160 | 104 | 5.77 | 81.2 | 64.0 |
| 2 | As is pH | 5.18 | 16.0 | 131 | 102 | 7.34 | 59.7 | 50.1 |
| 8 | Limed | 5.57 | 10.1 | 102 | 71.1 | 9.28 | 19.9 | 57.6 |
| Ca:Mg Ratio Series: | | | | | | | | |
| 9 | 1.0 Ca | 5.25 | 17.0 | 134 | 108 | 7.32 | 65.0 | 55.0 |
| 2 | 0 Ca/Mg | 5.18 | 16.0 | 131 | 102 | 7.34 | 59.7 | 50.1 |
| 10 | 2.5 Mg | 5.13 | 17.4 | 152 | 90.4 | 6.75 | 48.9 | 53.0 |
| 11 | 5.0 Mg | 5.04 | 16.2 | 149 | 87.6 | 5.71 | 54.8 | 67.1 |

| | | | | | | | | |
|---|---|---|---|---|---|---|---|---|
| "TRT" = treatment "MLo pH" = medium-low pH The soil designations correspond to the soil designations in Example 1. | | | | | | | | |

The "pH series" experiments demonstrate that the application of limestone increases the uptake of nickel in *Alyssum* so that plant tissues accumulate an increased concentration of nickel.

### Example 3

The results show an increase in the geometric mean of nickel uptake in plant tissue by liming *Alyssum* plants cultivated on nickel-refinery contaminated Quarry muck (soil 2) (Table 4) and on nickel-refinery contaminated Welloam loam (soil 1), nickel-refinery contaminated Quarry muck (soil 2) and selected serpentine soils (soils 3-11) (Table 5) from Example 1. The cultivation conditions were the same as those for Examples 1 and 2.

**Table 4**

| Effects of soil treatments on the mean concentrations of elements in whole shoots and shoot yield of *Alyssum murale* and *Alyssum corsicum* grown on nickel-refinery contaminated Quarry muck (soil 2) for 60 days. | | | | | | |
|---|---|---|---|---|---|---|
| Soil | TRT | Treatment | Shoot Yld | Shoot Ni | Shoot Co | Shoot MN |
| | | | g/pot | g/kg | mg/kg | mg/kg |
| 2 | 1 | None | 8.46 d* | 3.33 abc | 8.62 ab | 27.9 bc |
| Phosphate Series: | | | | | | |
| 2 | 3 | 0 P | 10.78 a-d | 3.24 be | 5.50 b | 15.0 bc |
| 2 | 2 | 100 P | 12.09 a | 3.23 bc | 5.75 ab | 14.5 bc |
| 2 | 4 | 250 P | 11.53 abc | 3.76 a | 5.50 b | 18.6 bc |
| 2 | 2 | 500 P | 11.86 ab | 3.30 abc | 6.38 ab | 27.7 bc |
| pH Series: | | | | | | |
| 2 | 6 | Lo pH | 12.01 ab | 1.48 e | 10.25 a | 59.8 a |
| 2 | 7 | Med pH | 9.44 bcd | 2.12 d | 6.12 ab | 29.0 b |
| 2 | 2 | As is pH | 12.09 a | 3.23 bc | 5.75 ab | 14.5 bc |
| 2 | 8 | Limed | 11.14 abc | 3.72 ab | 5.88 ab | 13.3 c |
| Ca:Me Series: | | | | | | |
| 2 | 9 | Ca | 9.08 cd | 3.42 abc | 6.38 ab | 16.3 bc |
| 2 | 2 | As is Ca | 12.09 a | 3.23 bc | 5.75 ab | 14.5 bc |
| 2 | 10 | Med Mg | 11.66 ab | 3.03 c | 4.62 b | 24.9 bc |
| 2 | 11 | Hi Mg | 9.98 a-d | 2.94 c | 5.25 b | 23.3 bc |

| | | | | | | |
|---|---|---|---|---|---|---|
| *a-e indicate means followed by the same letter are not significantly different at the P < 0.05 level according to the Duncan-Walker K-ratio t-test. "TRT" = treatment | | | | | | |

**Table 5**

| Effect of altering nickel-refinery contaminated Welland loam (soil 1), nickel-refinery contaminated Quarry muck (soil 2) and serpentine soils (soils 3-11) by adding phosphate, adjusting the pH or adjusting the Ca:Mg ratio on soil pH, mean yield and micronutrient composition of shoots of *Alyssum* species grown for 120 days (GM designates geometric mean). | | | | | | | | | |
|---|---|---|---|---|---|---|---|---|---|
| Soil | TRT | Final pH | GM-Yield | GM-Ni | GM-Co | GM-Mn | GM-Zn | GM-Fe | GM-Cu |
| | | | g/pot | mg/kg | | | | | |
| 1 | None | 6.34 | 20.2 | 5460 | 7.6 | 11.9 | 151 | 61 | 4.8 |
| Phosphate Treatments (phosphate added to the soil in kg/ha by the addition of phosphate-containing fertilizer): | | | | | | | | | |
| 3 | 0 P | 6.09 | 41.6 | 4400 | 5.8 | 16.5 | 152 | 56 | 4.2 |
| 2 | 100 P | 6.05 | 42.7 | 4120 | 5.7 | 18.6 | 126 | 57 | 4.5 |
| 4 | 250 P | 6.07 | 49.9 | 4120 | 5.1 | 21.4 | 143 | 57 | 4.8 |
| 5 | 500 P | 5.98 | 46.4 | 3800 | 5.1 | 22.9 | 139 | 54 | 4.2 |
| pH Treatments (soil was acidified using nitric acid for "Lo pH" and "Med-pH"): | | | | | | | | | |
| 6 | LopH | 5.44 | 32.2 | 2010 | 6.8 | 50.5 | 153 | 68 | 6.4 |
| 7 | Med-pH | 5.76 | 36.1 | 2700 | 4.5 | 21.0 | 143 | 60 | 4.8 |
| 2 | As is pH | 6.05 | 42.7 | 4120 | 5.7 | 18.6 | 126 | 57 | 4.5 |
| 8 | Limed | 6.20 | 40.5 | 4520 | 6.3 | 15.8 | 137 | 55 | 4.1 |
| Ca:Mg Treatments: | | | | | | | | | |
| 9 | 0.0 Ca | 6.13 | 38.6 | 4510 | 6.3 | 16.2 | 135 | 57 | 4.8 |
| 2 | 1.0 Ca | 6.05 | 42.7 | 4120 | 5.7 | 18.6 | 126 | 56 | 4.5 |
| 10 | 2.5 Mg | 5.98 | 39.0 | 4410 | 5.9 | 16.2 | 146 | 63 | 4.6 |
| 11 | 5.0 Mg | 5.91 | 44.0 | 4260 | 5.8 | 18.3 | 158 | 58 | 4.6 |

| | | | | | | | | | |
|---|---|---|---|---|---|---|---|---|---|
| "TRT" = treatment The soil designations correspond to the soil designations in Example 1. | | | | | | | | | |

### Example 4 - Novel Hyperaccumulators

**Table 6**

| The concentration of elements in the shoots of *Alyssum* species grown on a field of serpentine colluvial soil in Josephine County, Oregon, are shown in Table 6 below. | | | | | | | | | | | |
|---|---|---|---|---|---|---|---|---|---|---|---|
| Row Species | Genotype | Block | Zn | P | Cu | Co | Ni | Mn | Fe | Mg | Ca K |
| 139 *A. corsicum* | 16 | 1 | 137 | 5.01 | 9 | 14 | 13400 | 53 | 53.8 | 5.52 | 20.9 43.3 |
| 483 *A. corsicum* | 16 | 2 | 141 | 4.08 | 8 | 16 | 17500 | 32 | 755 | 5.99 | 24.2 44.3 |
| 129 *A. murale* | 49 | 1 | 99 | 4.80 | 7 | 12 | 14100 | 41 | 397 | 3.98 | 32.1 41.4 |
| 325 *A. murale* | 49 | 2 | 106 | 4.63 | 8 | 16 | 17100 | 46 | 455 | 5.32 | 31.7 41.7 |
| 135 *A. murale* | 54 | 1 | 119 | 4.18 | 5 | 13 | 15600 | 53 | 927 | 4.02 | 25.8 44.5 |
| 143 *A. murale* | 69 | 1 | 165 | 5.78 | 5 | 16 | 16700 | 53 | 380 | 4.52 | 17.3 38.8 |
| 553 *A. murale* | 69 | 2 | 191 | 4.97 | 6 | 15 | 13400 | 45 | 616 | 5.66 | 25.4 6.16 |

| | | | | | | | | | | | |
|---|---|---|---|---|---|---|---|---|---|---|---|
| The elements are present in mg/kg amounts. | | | | | | | | | | | |

Whole shoots or side branch samples containing stems and leaves were collected from pots or the field for each genotype, dried in forced air drying ovens and ground with a non-contaminating mill to less than about 0.1 mm. The ground samples were then placed in a borosilicate beaker and ashed at 480°C overnight. Nitric acid was added to dissolve the resultant ash which was then heated until dry on a hot plate. Hydrochloric acid (3.0 M) was added and the beaker was refluxed for two hours to determine recovered nickel concentration. Concentrations of nickel were measured by an inductively coupled argon plasma emission spectrometer. Low concentrations were measured by atomic absorption spectrometry.

This invention has been described in specific detail with regard to specific plants and methods for increasing metal, such as nickel, uptake via phytomining or phytoextraction. Except where necessary for operability, no limitation to these specific materials is intended nor should such a limitation be imposed on the claims appended hereto.

## Claims

1. A method for selectively increasing the amount of at least one first metal recovered from metal-containing soil, comprising:
obtaining a soil pH of at least about 6.3 where the at least one first metal is nickel;
or
obtaining a soil pH between about 6.3 and about 7.0 where the at least one first metal is cobalt; and
cultivating at least one metal-hyperaccumulator plant in the soil under conditions sufficient to permit the at least one plant to accumulate the at least one first metal from the soil in above-ground tissue.

2. The method of claim 1, wherein the at least one first metal is nickel.

3. The method of claim 1 or claim 2, wherein the pH of the soil is elevated by adding to the soil at least one agent that results in an increase in the soil pH.

4. The method of claim 3, wherein the at least one agent is selected from the group consisting of limestone, dolomitic limestone, lime, hydrated lime, limestone equivalents and mixtures thereof.

5. The method of any one of claims 1 to 4, wherein the at least one plant is an *Alyssum* plant.

6. The method of claim 5, wherein the Alyssum plant is selected from the group consisting of *A. murale, A. pintodasilvae, A. serpyllifolium, A. malacitanum, A. lesbiacum, A. fallacinum, A. argenfeum, A. bertolonii, A. tenium, A. heldreichii, A. corsicum, A. pferocarpum, A. caricum* and mixtures thereof.

7. The method claim 1, further comprising:
elevating the pH of the soil from a first pH to a second pH of at least about 6.3 where the at least one first metal is nickel; or
elevating the pH of the soil from a first pH to a second pH of between about 6.3 and about 7.0 where the at least one first metal is cobalt; and
cultivating at least one metal-hyperaccumulator plant in the soil under conditions sufficient to permit the at least one plant to accumulate the at least one first metal from the soil in above-ground tissue;
thereafter lowering the pH of the soil; and
cultivating the at least one metal-hyperaccumulator plant in the soil under conditions sufficient to permit the at least one plant to accumulate at least one second metal from the soil in above-ground tissue.

8. The method of claim 7, wherein the at least one first metal is nickel.

9. The method of claim 7 or claim 8, wherein the at least one second metal is selected from the group consisting of cobalt, palladium, rhodium, ruthenium, platinum, iridium, osmium, rhenium and mixtures thereof.

10. The method of claim 2, wherein at least one nickel-hyperaccumulator plant is cultivated in the soil under conditions such that at least 0.1% of the above-ground tissue of the at least one plant, on a dry weight basis, is nickel; and further comprising
harvesting the at least one plant; and
recovering nickel from the harvested plant.

11. The method of claim 10, wherein the soil has a calcium concentration of between about 20-80%.

12. The method of claim 10 or claim 11, wherein the nickel is recovered by drying and combusting the harvested plant to oxidize and vaporize any organic material present in the harvested plant.

13. The method of any one of claims 10 to 12, wherein the at least one plant is an *Alyssum* plant.

14. The method of claim 13 wherein the *Alyssum* plant is selected from the group consisting of *A. murale, A. pintodasilvae, A. serpyllifolium, A. malacitanum. A. lesbiacum, A. fallacinum, A. argenteum, A. bertolonii, A. tenium, A. heldreichii, A. corsicum, A. pterocarpum, A. caricum* and mixtures thereof.

15. The method of claim 14, wherein the *Alyssum* plant is selected from the group consisting of A. *murale* G69, *A. murale* G82, *A. corsicum* G16 and mixtures thereof.

16. The method of any one of claims 10 to 15, wherein at least about 2.5% of the above-ground tissue of the at least one plant, on a dry weight basis, is nickel.

17. The method of claim 16, wherein at least about 3.0% of the above-ground tissue of the at least one plant, on a dry weight basis, is nickel.

18. The method of claim 17, wherein at least about 4.0% of the above-ground tissue of the at least one plant, on a dry weight basis, is nickel.

19. The method of claim 1, further comprising:
lowering the pH of the soil;
cultivating at least one metal-hyperaccumulator plant in the soil under conditions sufficient to permit the at least one plant to accumulate at least one second metal from the soil in above-ground tissue;
thereafter elevating the pH of the soil from a first pH to a second pH of at least about 6.3 where the at least one first metal is nickel; or
thereafter elevating the pH of the soil from a first pH to a second pH of between about 6.3 and 7.0 where the at least one first metal is cobalt; and
cultivating the at least one metal-hyperaccumulator plant in the soil under conditions sufficient to permit the least one plant to accumulate the at least one first metal from the soil in the above-ground tissue.

20. The method of claim 19 wherein the at least one first metal is nickel.

21. The method of claim 19 or claim 20, wherein the pH of the soil is elevated by adding to the soil at least one agent selected from the group consisting of limestone, dolomitic limestone, lime, hydrated lime, limestone equivalents and mixtures thereof.

22. The method of any one of claims 19 to 21, wherein the at least one plant is an *Alyssum* plant.

23. The method of claim 22, wherein the *Alyssum* plant is selected from the group consisting of *A murale, A. pintodasilvae, A. serpyllifolium, A. malacitanum, A. lesbiacum, A. fallacinum, A argenteum, A. bertolonii, A. fenium, A. heldreichii, A. corsicum, A. pterocarpum, A. caricum* and mixtures thereof.

24. The method of any one of claims 19 to 23, wherein the at least one second metal is selected from the group consisting of cobalt, palladium, rhodium, ruthenium, platinum, iridium, osmium, rhenium and mixtures thereof.

25. The method of claim 1, wherein the at least one metal-hyperaccumulator plant cultivated in the soil under conditions sufficient to permit the at least one plant to accumulate the at least one first metal from the soil in above-ground tissue is selected from the group consisting of *Cyanotis longifolia, Bulbostylis mucronata, Combretum decandrum; Crassula alba, Crassula vaginata, Crassula argyrophylla, Clethra barbinervis, Geissois intermedia, Geissois magnifica, Geissois montana, Geissois trifoliate, Geissois racemosa, Psychotria douarrei, Rinorea bengalensis, Pearsonia metallifera, Dichapetalum gelonioides ssp. tuberculatum and amanicum, Blepharis acuminata, Justicia lanstyakii, Lophostachys villosa, Phidiasia lindavii, Ruellia geminiflora, Adiantum sp., Rhus wildii, Chromolaena sp. cf. meyeri, Dicoma niccolifera, Gochnatia crassifolia, Gochnatia recurva, Koanophyllon grandiceps, Koanophyllon prinodes, Leucanthemopsis alpha, Penfacalia, Senecio pauperculus, Shafera plaryphylla, Solidago hispida, Heliotropium sp., Bornmuellera, Cardamine resedifolia, Cochlearia aucheri, Cochlearia sempervivium, Peltaria emarginata, Buxus, Campanula scheuchzeri, Arenaria, Minuartia laricifolia, Minuartia verna, Garcinia bakeriana, Garcinia polyneura, Garcinia revolute, Garcinia ruscifolia, Merremia xanthophylla, Pancheria engleriana, Shorea tenuiramulsoa, Argophyllum grunowii, Argophyllum laxum, Baloghia sp., Bonania, Cleidion viellardii, Cnidoscolus sp. cf. bahianus, Euphorbia, Gymnanthes recurva, Leucocroton, Phyllanthus, Sapium erythrospermum, Savia, Anthyllis sp., Trifolium pallescens, Casearia silvana, Xylosma, Luzula lutea, Walsura monophylla, Myristica laurifolia, Mosiera araneosa, Mosiera ekmanii, Mosiera x miraflorensis, Mosiera ophiticola, Psidium araneosum, Psidium havanense, Brackenridgea palustris and ssp. foxworthyi and kpllbergii, Ouratea nitida, Ouratea striata, Chionanthus domingensis, Oncotheca balansae, Trisetum distichophyllum, Ranunculus glacialis, Ariadne ssp. Shaferi and moaensis, Mitracarpus sp., Phyllomelia coronata, Psychotria clementis, Psychotria costivenia, Psychotria douarrei, Psychotria glomerata, Psychotria osseana, Psychotria vanhermanii, Rondeletia, Planchonella oxyedra, Saxifraga, Esterhazya s.p., Linaria alpina, Tetralix brachypetalus, Tetralix cristalensis, Tetralix jaucoensis, Tetralix moaensis, Tetralix nipensis, Trichospermum kjellbergii, Turnera subnuda, Vellozia sp., Agatea deplanchei, Rinorea javanica, Acer pseudoplatanus, Minuarfia vernai, Polycarpaea synandrai, Cistus incanus ssp. creticus, Armeria maritime var. halleri, Agrostis stolonifera, Agrostis tenuis, Arrhenatherum elatius, Festuca ovina, Rumex acetosa, Viola calaminaria, Pandiaka metallorum, Celosia trigyna, Anisopappus chinensis, Anisopappus davyi, Gutenbergia pubescens, Millotia myosotidifoliab, Vernonia petersii, Minuartia verna ssp. hercynicia, Silene cobalticola, Commelina zigzag, Cyanotis longifolia, lpomoea alpina, Ascopepis metallorum, Bulbostylis cupricola, Bulbosfylis pseudoperennis, Monadenium cupricola, Phyllanfhus williamioides, Crotalaria cobalticola, Vigna dolomitica, Gladiolus gregarious, Aeollanthus subacaulis var. linearis, Aeollanthus homblei, Aeollanthus saxatilis, Aeollanthus subacaulis var. ericoides and var. linearis, Becium grandiflorum var. vanderystii, Haumaniastrum homblei, Haumaniastrum robertii, Haumaniastrum rosulatum, Hibiscus rhodanthus, Abies balsamea, Eragrostis racemosa, Rendlia altera, Sporobolus congoensis, Actiniopteris sp., Alectra sessiliflora var, senegalensis, Buchnera henriquesii, Crepidorhopalon tenuisa, Crepidorhopalon perennisa, Sopubia mannii, Sopubia metallorum, Sopubia neptuniii, Striga hermontheca, Triumfetta dekindtiana, Triumfetta digifata, Triumfetta welwitschii var. descampii, Xerophyta retinewis var. equisetoides, Alyxia rubricaulis, Maytenus bureaviania, Maytenus pancheriana, Maytenus sebertiana, Garcinia amplexicaulis, Eugenia clusioides, Beaupreopsis paniculata, Macadamia angustifolia, Macadamia neurophylla, Haplopappus fremontii, Machaeranthera glabriuscula, Machaeranthera ramosa, Machaeranthera venusta, Sfanleya pinnata, Stanleya bipinnata, Atriplex confertifolia, Lecythis ollaria, Acacia cana, Astragalus bisulcatus, Astragalus osterhoutii, Astragalus pattersonii, Astragalus pectinatus, Astragalus racernosus, Neptunia amplexicaulis, Morinda reticulafa and Castilleja chromosa*.

26. The method of claim 25, wherein the at least one first metal is of nickel.

27. The method of claim 25 or claim 26, wherein the pH of the soil is lowered by adding to the soil at least one agent that results in a decrease of the soil pH.

28. The method of claim 1, wherein the at least one metal-hyperaccumulator plant cultivated in the soil under conditions sufficient to permit the at least one plant to accumulate the at least one first metal from the soil in above-ground tissue is selected from the group consisting of *Leucocroton sp., Phyllanthus sp. and Psychotria sp*.

29. The method of any one of claims 25 to 27, wherein the at least one metal-hyperaccumulator plant is cultivated in the soil under conditions sufficient to permit the at least one plant to accumulate the at least one first metal from the soil in above-ground tissue in an amount exceeding the concentration of the at least one first metal in the soil by a factor of at least 2.

30. The method of claim 29, wherein the at least one plant accumulates the at least one first metal from the soil in above-ground tissue in an amount exceeding the concentration of the at least one first metal in the soil by a factor of at least 3.

31. The method of claim 30, wherein the at least one plant accumulates the at least one first metal from the soil inabove-ground tissue in an amount exceeding the concentration of the at least one first metal in the soil by a factor of at least 4.

32. The method of claim 28, wherein at least one metal-hyperaccumulator plant selected from the group consisting of *Leucocroton sp., Phyllanthus sp. and Psychofria sp*. is cultivated in the soil under conditions sufficient to permit the at least one plant to accumulate the at least one first metal from the soil in above-ground tissue in an amount exceeding the concentration of the at least one first metal in the soil by a factor of at least 2.

33. The method of claim 1, wherein the accumulation of said at least one first metal is accompanied by the recovery of at least one second metal.

34. The method of claim 33 wherein the at least one second metal is selected from the group consisting of nickel, cobalt, manganese, palladium, rhodium, ruthenium, platinum, iridium, osmium, rhenium and mixtures thereof.

## Patentansprüche

1. Methode zum selektiven Erhöhen der Menge von mindestens einem ersten Metall, das aus metallhaltigem Boden gewonnen wird, umfassend:
das Erhalten eines Boden-pH-Werts von mindestens etwa 6,3, wobei das mindestens eine erste Metall Nickel ist,
oder
das Erhalten eines Boden-pH-Werts zwischen etwa 6,3 und etwa 7,0, wobei das mindestens eine erste Metall Kobalt ist; und
das Züchten mindestens einer Metallhyperakkumulatorpflanze in dem Boden unter Bedingungen, die ausreichen, um zu erlauben, dass die mindestens eine Pflanze das mindestens eine erste Metall aus dem Boden in oberirdischem Gewebe akkumuliert.

2. Methode nach Anspruch 1, wobei das mindestens eine erste Metall Nickel ist.

3. Methode nach Anspruch 1 oder Anspruch 2, wobei der pH-Wert des Bodens durch Hinzugeben zum Boden von mindestens einem Mittels, das zu einer Erhöhung des Boden-pH-Werts führt, erhöht wird.

4. Methode nach Anspruch 3, wobei das mindestens eine Mittel aus der Gruppe ausgewählt ist bestehend aus Kalkstein, dolomitischem Kalkstein, Kalk, Löschkalk, Kalksteinäquivalenten und Mischungen derselben.

5. Methode nach einem der Ansprüche 1 bis 4, wobei die mindestens eine Pflanze eine *Alyssum-*Pflanze ist.

6. Methode nach Anspruch 5, wobei die Alyssum-Pflanze aus der Gruppe ausgewählt ist bestehend aus *A. murale, A. pintodasilvae, A. serpyllifolium, A. malacitanum, A. lesbiacum, A. fallacinum, A. argenfeum, A. bertolonii, A. tenium, A. heldreichii, A. corsicum, A. pterocarpum, A. caricum* und Mischungen derselben.

7. Methode nach Anspruch 1, des Weiteren umfassend:
das Erhöhen des pH-Werts des Bodens von einem ersten pH-Wert auf einen zweiten pH-Wert von mindestens etwa 6,3, wobei das mindestens eine erste Metall Nickel ist; oder
das Erhöhen des pH-Werts des Bodens von einem ersten pH-Wert auf einen zweiten pH-Wert zwischen etwa 6,3 und etwa 7,0, wobei das mindestens eine erste Metall Kobalt ist; und
das Züchten mindestens einer Metallhyperakkumulatorpflanze in dem Boden unter Bedingungen, die ausreichen, um zu erlauben, dass die mindestens eine Pflanze das mindestens eine erste Metall aus dem Boden in oberirdischem Gewebe akkumuliert;
daraufhin das Reduzieren des pH-Werts des Bodens; und
das Züchten der mindestens einen Metallhyperakkumulatorpflanze in dem Boden unter Bedingungen, die ausreichen, um zu erlauben, dass die mindestens eine Pflanze mindestens ein zweites Metall aus dem Boden in oberirdischem Gewebe akkumuliert.

8. Methode nach Anspruch 7, wobei das mindestens eine erste Metall Nickel ist.

9. Methode nach Anspruch 7 oder Anspruch 8, wobei das mindestens eine zweite Metall aus der Gruppe ausgewählt ist bestehend aus Kobalt, Palladium, Rhodium, Ruthenium, Platin, Iridium, Osmium, Rhenium und Mischungen derselben.

10. Methode nach Anspruch 2, wobei mindestens eine Nickelhyperakkumulatorpflanze in dem Boden unter Bedingungen gezüchtet wird, derart, dass mindestens 0,1 % des oberirdischen Gewebes der mindestens einen Pflanze auf Trockengewichtsbasis Nickel ist; und des Weiteren umfassend
das Ernten der mindestens einen Pflanze; und
das Gewinnen von Nickel aus der geernteten Pflanze.

11. Methode nach Anspruch 10, wobei der Boden eine Calciumkonzentration zwischen etwas 20 - 80 % aufweist.

12. Methode nach Anspruch 10 oder Anspruch 11, wobei der Nickel durch Trocknen und Verbrennen der geernteten Pflanze zum Oxidieren und Verdampfen irgendwelchen organischen Materials, das in der geernteten Pflanze vorliegt, gewonnen wird.

13. Methode nach einem der Ansprüche 10 bis 12, wobei die mindestens eine Pflanze eine *Alyssum-*Pflanze ist.

14. Methode nach Anspruch 13, wobei die Alyssum-Pflanze aus der Gruppe ausgewählt ist bestehend aus *A. murale, A. pintodasilvae, A. serpyllifolium, A. malacitanum, A. lesbiacum, A. fallacinum, A. argenteum, A. bertolonii, A. tenium, A. heldreichii, A. corsicum, A. pterocarpum, A. caricum* und Mischungen derselben.

15. Methode nach Anspruch 14, wobei die *Alyssum-Pflanze* aus der Gruppe ausgewählt ist bestehend aus *A. murale* G69, *A. murale G82, A. corsicum* G16 und Mischungen derselben.

16. Methode nach einem der Ansprüche 10 bis 15, wobei mindestens etwa 2,5 % des oberirdischen Gewebes der mindestens einen Pflanze auf Trockengewichtsbasis Nickel sind.

17. Methode nach Anspruch 16, wobei mindestens etwa 3,0 % des oberirdischen Gewebes der mindestens einen Pflanze auf Trockengewichtsbasis Nickel sind.

18. Methode nach Anspruch 17, wobei mindestens etwa 4,0 % des oberirdischen Gewebes der mindestens einen Pflanze auf Trockengewichtsbasis Nickel sind.

19. Methode nach Anspruch 1, des Weiteren umfassend:
das Reduzieren des pH-Werts des Bodens;
das Züchten mindestens einer Metallhyperakkumulatorpflanze in dem Boden unter Bedingungen, die ausreichen, um zu erlauben, dass die mindestens eine Pflanze mindestens ein zweites Metall aus dem Boden in oberirdischem Gewebe akkumuliert;
daraufhin das Erhöhen des pH-Werts des Bodens von einem ersten pH-Wert auf einen zweiten pH-Wert von mindestens 6,3, wobei das mindestens eine erste Metall Nickel ist;
daraufhin das Erhöhen des pH-Werts des Bodens von einem ersten pH-Wert auf einen zweiten pH-Wert zwischen etwa 6,3 und etwa 7,0, wobei das mindestens eine erste Metall Kobalt ist; und
das Züchten der mindestens einen Metallhyperakkumulatorpflanze in dem Boden unter Bedingungen, die ausreichen, um zu erlauben, dass die mindestens eine Pflanze das mindestens eine erste Metall aus dem Boden in oberirdischem Gewebe akkumuliert.

20. Methode nach Anspruch 19, wobei das mindestens eine erste Metall Nickel ist.

21. Methode nach Anspruch 19 oder Anspruch 20, wobei der pH-Wert des Bodens durch Hinzugeben zum Boden mindestens eines Mittels ausgewählt aus der Gruppe bestehend aus Kalkstein, dolomitischem Kalkstein, Kalk, Löschkalk, Kalksteinäquivalenten und Mischungen derselben erhöht wird.

22. Methode nach einem der Ansprüche 19 bis 21, wobei die mindestens eine Pflanze eine *Alyssum-*Pflanze ist.

23. Methode nach Anspruch 22, wobei die *Alyssum-Pflanze* aus der Gruppe ausgewählt ist bestehend aus *A. murale, A. pintodasilvae, A. serpyllifolium, A. malacitanum, A. lesbiacum, A. fallacinum, A. argenteum, A. bertolonii, A. fenium, A. heldreichii, A. corsicum, A. pterocarpum, A. caricum* und Mischungen derselben.

24. Methode nach einem der Ansprüche 19 bis 23, wobei das mindestens eine zweite Metall aus der Gruppe ausgewählt ist bestehend aus Kobalt, Palladium, Rhodium, Ruthenium, Platin, Iridium, Osmium, Rhenium und Mischungen derselben.

25. Methode nach Anspruch 1, wobei die mindestens eine Metallhyperakkumulatorpflanze, die in dem Boden unter Bedingungen gezüchtet wird, die ausreichen, um zu erlauben, dass die mindestens eine Pflanze das mindestens eine erste Metall aus dem Boden in oberirdischem Gewebe akkumuliert, aus der Gruppe ausgewählt ist bestehend aus *Cyanotis longifolia, Bulbostlis mucronata, Combretum decandrum, Crassula alba, Crassula vaginata, Crassula argyrophylla, Clethra barbinervis, Geissois intermedia, Geissois magnifica, Geissois montana, Geissois trifoliate, Geissois racemosa, Psychotria douarrei, Rinorea bengalensis, Pearsonia metallifera, Dichapetalum gelonioides ssp. tuberculatum* et *amanicum, Blepharis acuminata, Justicia lanstyakii, Lophostachys villosa, Phidiasia lindavii, Ruellia geminiflora, Adiantum sp., Rhus wildii, Chromolaena sp. cf. meyeri, Dicoma niccolifera, Gochnatia crassifolia, Gochnatia recurva, Koanophyllon grandiceps, Koanophylloh prinodes, Leucanthemopsis alpha, Penfacalia, Senecio pauperculus, Shafera platyphylla, Solidago hispida, Heliotropium sp., Bornmuellera, Cardamine resedifolia, Cochlearia aucheri, Cochlearia sempervivium, Peltaria emarginata, Buxus, Campanula scheuchzeri, Arenaria, Minuartia laricifolia, Minuartia verna, Garcinia bakeriana, Garcinia polyneura, Garcinia revolute, Garcinia ruscifolia, Merremia xanthophylla, Pancheria engleriana, Shorea tenuiramulsoa, Argophyllum grunowii, Argophyllum laxum, Baloghia sp., Bonania, Cleidion viellardii, Cnidoscolus sp. cf. bahianus, Euphorbia, Gymnanthes recurva, Leucocroton, Phyllanthus, Sapium erythrospermum, Savia, Anthyllis sp., Trifolium pallescens, Casearia silvana, Xylosma, Luzula lutea, Walsura monophylla, Myristica laurifolia, Mosiera araneosa, Mosiera ekmanii, Mosiera x miraflorensis, Mosiera ophiticola, Psidium araneosum, Psidium havanense, Brackenridgea palustris* et *ssp. foxworthyi* et *kpllbergii, Ouratea nitida, Ouratea striata, Chionanthus domingensis, Oncotheca balansae, Trisetum distichophyllum, Ranunculus glacialis, Ariadne ssp. Shaferi* et *moaensis, Mitracarpus sp., Phyllomelia coronata, Psychotria clementis, Psychotria costivenia, Psychotria douarrei, Psychotria glomerata, Psychotria osseana, Psychotria vanhermanii, Rondeletia, Planchonella oxyedra, Saxifraga, Esterhazya sp., Linaria alpina, Tetralix brachypetalus, Tetralix cristalensis, Tetralix jaucoensis, Tetralix moaensis, Tetralix nipensis, Trichospermum kjellbergii, Turnera subnuda, Vellozia sp., Agatea deplanchei, Rinorea javanica, Acer pseudoplatanus, Minuarfia vernai, Polycarpaea synandrai, Cistus incanus ssp. creticus, Armeria maritime var. halleri, Agrostis stolonifera, Agrostis tenuis, Arrhenatherum elatius, Festuca ovina, Rumex acetosa, Viola calaminaria, Pandiaka metallorum, Celosia trigyna, Anisopappus chinensis, Anisopappus davyi, Gutenbergia pubescens, Millotia myosotidifoliab, Vernonia petersii, Minuartia verna ssp. hercynicia, Silene cobalticola, Commelina zigzag, Cyanotis longifolia, Ipomoea alpina, Ascopepis metallorum, Bulbostylis cupricola, Bulbosfylis pseudoperennis, Monadenium cupricola, Phyllanfhus williamioides, Crotalaria cobalticola, Vigna dolomitica, Gladiolus gregarious, Aeollanthus subacaulis var. linearis, Aeollanthus homblei, Aeollanthus saxatilis, Aeollanthus subacaulis var. ericoides* et *var. linearis, Becium grandiflorum var. vanderystii, Haumaniastrum homblei, Haumaniastrum robertii, Haumaniastrum rosulatum, Hibiscus rhodanthus, Abies balsamea, Eragrostis racemosa, Rendlia altera, Sporobolus congoensis, Actiniopteris sp., Alectra sessilifiora var. senegalensis, Buchnera henriquesii, Crepidorhopalon tenuisa, Crepidorhopalon perennisa, Sopubia mannii, Sopubia metallorum, Sopubia neptuniii, Striga hermontheca, Triumfetta dekindtiana, Triumfetta digifata, Triumfetta welwitschii var. descampii, Xerophyta retinewis var. equisetoides, Alyxia rubricaulis, Maytenus bureaviania, Maytenus pancheriana, Maytenus sebertiana, Garcinia amplexicaulis, Eugenia clusioides, Beaupreopsis pahiculata, Macadamia angustifolia, Macadamia neurophylla, Haplopappus fremontii, Machaeranthera glabriuscula, Machaeranthera ramosa, Machaeranthera venusta, Sfanleya pinnata, Stanleya bipinnata, Atriplex confertifolia, Lecythis ollaria, Acacia cana, Astragalus bisulcatus, Astragalus osterhoutii, Astragalus pattersonii, Astragalus pectinatus, Astragalus racernosus, Neptunia amplexicaulis, Morinda reticulafa* et *Castilleja chromosa.*

26. Methode nach Anspruch 25, wobei das mindestens eine erste Metall Nickel ist.

27. Methode nach Anspruch 25 oder Anspruch 26, wobei der pH-Wert des Bodens durch Hinzugeben zum Boden mindestens eines Mittels, das zu einer Reduzierung des Boden-pH-Werts führt, reduziert wird.

28. Methode nach Anspruch 1, wobei die mindestens eine Metallhyperakkumulatorpflanze, die in dem Boden unter Bedingungen gezüchtet wird, die ausreichen, um zu erlauben, dass die mindestens eine Pflanze das mindestens eine erste Metall aus dem Boden in oberirdischem Gewebe akkumuliert, aus der Gruppe ausgewählt ist bestehend aus *Leucocroton sp., Phyllanthus sp.* und *Psychotria sp*.

29. Methode nach einem der Ansprüche 25 bis 27, wobei die mindestens eine Metallhyperakkumulatorpflanze in dem Boden unter Bedingungen gezüchtet wird, die ausreichen, um zu erlauben, dass die mindestens eine Pflanze das mindestens eine erste Metall aus dem Boden in oberirdischem Gewebe in einer Menge akkumuliert, die die Konzentration des mindestens einen ersten Metalls in dem Boden um einen Faktor von mindestens 2 übersteigt.

30. Methode nach Anspruch 29, wobei die mindestens eine Pflanze das mindestens erste Metall aus dem Boden in oberirdischem Gewebe in einer Menge akkumuliert, die die Konzentration des mindestens einen ersten Metalls in dem Boden um einen Faktor von mindestens 3 übersteigt.

31. Methode nach Anspruch 30, wobei die mindestens eine Pflanze das mindestens eine erste Metall aus dem Boden in oberirdischem Gewebe in einer Menge akkumuliert, die die Konzentration des mindestens einen ersten Metalls in dem Boden um einen Faktor von mindestens 4 übersteigt.

32. Methode nach Anspruch 28, wobei mindestens eine Metallhyperakkumulatorpflanze, die aus der Gruppe ausgewählt ist bestehend aus *Leucocroton sp., Phyllantus sp.* und *Psychofria sp.,* in dem Boden unter Bedingungen gezüchtet wird, die ausreichen, um zu erlauben, dass die mindestens eine Pflanze das mindestens eine erste Metall aus dem Boden in oberirdischem Gewebe in einer Menge akkumuliert, die die Konzentration des mindestens einen ersten Metalls in dem Boden um einen Faktor von mindestens 2 übersteigt.

33. Methode nach Anspruch 1, wobei die Akkumulation des mindestens einen ersten Metalls von der Gewinnung mindestens eines zweiten Metalls begleitet ist.

34. Methode nach Anspruch 33, wobei das mindestens eine zweite Metall aus der Gruppe ausgewählt ist bestehend aus Nickel, Kobalt, Mangan, Palladium, Rhodium, Ruthenium, Platin, Iridium, Osmium, Rhenium und Mischungen derselben.

## Revendications

1. Procédé permettant d'augmenter de manière sélective la quantité d'au moins un premier métal récupéré à partir d'un sol contenant du métal, comprenant:
l'obtention d'un pH du sol d'au moins environ 6,3 où le au moins un premier métal est le nickel; ou
l'obtention d'un pH du sol compris entre environ 6,3 et environ 7,0 où le au moins un premier métal est le cobalt; et
la culture d'au moins une plante hyperaccumulatrice de métal dans le sol sous des conditions suffisantes pour permettre à la au moins une plante d'accumuler le au moins un premier métal du sol dans le tissu situé au-dessus du sol.

2. Procédé selon la revendication 1, dans lequel le au moins un premier métal est le nickel.

3. Procédé selon la revendication 1 ou la revendication 2, dans lequel le pH du sol est élevé par l'addition au sol d'au moins un agent qui résulte en une augmentation du pH du sol.

4. Procédé selon la revendication 3, dans lequel le au moins un agent est choisi parmi le groupe constitué de la pierre à chaux, pierre à chaux dolomitique, de la chaux, chaux hydratée, des équivalents de la pierre à chaux et des mélanges de ceux-ci.

5. Procédé selon l'une quelconque des revendications 1 à 4, dans lequel la au moins une plante est une plante du genre *Alyssum.*

6. Procédé selon la revendication 5, dans lequel la plante du genre *Alyssum* est choisie parmi le groupe constitué d'*A. murale, A. pintodasilvae, A. serpyllifolium, A. malacitanum, A. lesbiacum, A. fallacinum, A. argenfeum, A. bertolonii, A. tenium, A. heldreichii, A. corsicum, A. pterocarpum, A. caricum* et des mélanges de ceux-ci.

7. Procédé selon la revendication 1, comprenant en outre:
l'élévation du pH du sol à partir d'un premier pH jusqu'à un second pH d'au moins environ 6,3 où le au moins un premier métal est le nickel; ou
l'élévation du pH du sol à partir d'un premier pH jusqu'à un second pH compris entre environ 6,3 et environ 7,0 où le au moins un premier métal est le cobalt; et
la culture d'au moins une plante hyperaccumulatrice de métal dans le sol sous des conditions suffisantes pour permettre à la au moins une plante d'accumuler le au moins un premier métal du sol dans le tissu situé au-dessus du sol;
par la suite la réduction du pH du sol; et
la culture de la au moins une plante hyperaccumulatrice de métal dans le sol sous des conditions suffisantes pour permettre à la au moins une plante d'accumuler au moins un second métal du sol dans le tissu situé au-dessus du sol.

8. Procédé selon la revendication 7, dans lequel le au moins un premier métal est le nickel.

9. Procédé selon la revendication 7 ou la revendication 8, dans lequel le au moins un second métal est choisi parmi le groupe constitué du cobalt, palladium, rhodium, ruthénium, platine, de l'iridium, osmium, du rhénium et des mélanges de ceux-ci.

10. Procédé selon la revendication 2, dans lequel au moins une plante hyperaccumulatrice de nickel est cultivée dans le sol sous des conditions telles qu'au moins 0,1 % du tissu situé au-dessus du sol de la au moins une plante, sur une base du poids sec, est le nickel; et comprenant en outre
la récolte de la au moins une plante; et
la récupération du nickel de la plante récoltée.

11. Procédé selon la revendication 10, dans lequel le sol a une concentration en calcium comprise entre environ 20 et 80 %.

12. Procédé selon la revendication 10 ou la revendication 11, dans lequel le nickel est récupéré par le séchage et la combustion de la plante récoltée pour oxyder et vaporiser tout matériau organique présent dans la plante récoltée.

13. Procédé selon l'une quelconque des revendications 10 à 12, dans lequel la au moins une plante est une plante du genre *Alyssum.*

14. Procédé selon la revendication 13, dans lequel la plante du genre *Alyssum* est choisie parmi le groupe constitué d'*A. murale, A. pintodasilvae, A. serpyllifolium, A. malacitanum, A. lesbiacum, A. fallacinum, A. argenteum, A. bertolonii, A. tenium, A. heldreichii, A. corsicum, A. pterocarpum, A. caricum* et des mélanges de ceux-ci.

15. Procédé selon la revendication 14, dans lequel la plante du genre *Alyssum* est choisie parmi le groupe constitué d'*A. murale* G69, *A. murale* G82, *A. corsicum* G16 et des mélanges de ceux-ci.

16. Procédé selon l'une quelconque des revendications 10 à 15, dans lequel au moins environ 2,5 % du tissu situé au-dessus du sol de la au moins une plante, sur une base du poids sec, est le nickel.

17. Procédé selon la revendication 16, dans lequel au moins environ 3,0 % du tissu situé au-dessus du sol de la au moins une plante, sur une base du poids sec, est le nickel.

18. Procédé selon la revendication 17, dans lequel au moins environ 4,0 % du tissu situé au-dessus du sol de la au moins une plante, sur une base du poids sec, est le nickel.

19. Procédé selon la revendication 1, comprenant en outre:
la réduction du pH du sol;
la culture d'au moins une plante hyperaccumulatrice de métal dans le sol sous des conditions suffisantes pour permettre à la au moins une plante d'accumuler au moins un second métal du sol dans le tissu situé au-dessus du sol;
par la suite l'élévation du pH du sol à partir d'un premier pH jusqu'à un second pH d'au moins environ 6,3 où le au moins un premier métal est le nickel; ou
par la suite l'élévation du pH du sol à partir d'un premier pH jusqu'à un second pH compris entre environ 6,3 et 7,0 où le au moins un premier métal est le cobalt; et
la culture de la au moins une plante hyperaccumulatrice de métal dans le sol sous des conditions suffisantes pour permettre à la au moins une plante d'accumuler le au moins un premier métal du sol dans le tissu situé au-dessus du sol.

20. Procédé selon la revendication 19, dans lequel le au moins un premier métal est le nickel.

21. Procédé selon la revendication 19 ou la revendication 20, dans lequel le pH du sol est élevé par l'addition au sol d'au moins un agent choisi parmi le groupe constitué de la pierre à chaux, pierre à chaux dolomitique, de la chaux, chaux hydratée, des équivalents de la pierre à chaux et des mélanges de ceux-ci.

22. Procédé selon l'une quelconque des revendications 19 à 21, dans lequel la au moins une plante est une plante du genre *Alyssum.*

23. Procédé selon la revendication 22, dans lequel la plante du genre *Alyssum* est choisie parmi le groupe constitué d'*A. murale, A. pintodasilvae, A. serpyllifolium, A. malacitanum, A. lesbiacum, A. fallacinum, A. argenteum, A. bertolonii, A. fenium, A. heldreicii, A. corsicum, A. pterocarpum, A. caricum* et des mélanges de ceux-ci.

24. Procédé selon l'une quelconque des revendications 19 à 23, dans lequel le au moins un second métal est choisi parmi le groupe constitué du cobalt, palladium, rhodium, ruthénium, platine, de l'iridium, osmium, du rhénium et des mélanges de ceux-ci.

25. Procédé selon la revendication 1, dans lequel la au moins une plante hyperaccumulatrice de métal cultivée dans le sol sous des conditions suffisantes pour permettre à la au moins une plante d'accumuler le au moins un premier métal du sol dans le tissu situé au-dessus du sol est choisie parmi le groupe constitué de *Cyanotis longifolia, Bulbostlis mucronata, Combretum decandrum, Crassula alba, Crassula vaginata, Crassula argyrophylla, Clethra barbinervis, Geissois intermedia, Geissois magnifica, Geissois montana, Geissois trifoliate, Geissois racemosa, Psychotria douarrei, Rinorea bengalensis, Pearsonia metallifera, Dichapetalum gelonioides ssp. tuberculatum* et *amanicum, Blepharis acuminata, Justicia lanstyakii, Lophostachys villosa, Phidiasia lindavii, Ruellia geminiflora, Adiantum sp., Rhus wildii, Chromolaena sp. cf. meyeri, Dicoma niccolifera, Gochnatia crassifolia, Gochnatia recurva, Koanophyllon grandiceps, Koanophyllon prinodes, Leucanthemopsis alpha, Penfacalia, Senecio pauperculus, Shafera platyphylla, Solidago hispida, Heliotropium sp., Bornmuellera, Cardamine resedifolia, Cochlearia aucheri, Cochlearia sempervivium, Peltaria emarginata, Buxus, Campanula scheuchzeri, Arenaria, Minuartia laricifolia, Minuartia verna, Garcinia bakeriana, Garcinia polyneura, Garcinia revolute, Garcinia ruscifolia, Merremia xanthophylla, Pancheria engleriana, Shorea tenuiramulsoa, Argophyllum grunowii, Argophyllum laxum, Baloghia sp., Bonania, Cleidion viellardii, Cnidoscolus sp. cf. bahianus, Euphorbia, Gymnanthes recurva, Leucocroton, Phyllanthus, Sapium erythrospermum, Savia, Anthyllis sp., Triforium pallescens, Casearia silvana, Xylosma, Luzula lutea, Walsura monophylla, Myristica laurifolia, Mosiera araneosa, Mosiera ekmanii, Mosiera x miraflorensis, Mosiera ophiticola, Psidium araneosum, Psidium havanense, Brackenridgea palustris* et *ssp. foxworthyi* et *kpllbergii, Ouratea nitida, Ouratea striata, Chionanthus domingensis, Oncotheca balansae, Trisetum distichophyllum, Ranunculus glacialis, Ariadne ssp. Shaferi* et *moaensis, Mitracarpus sp., Phyllomelia coronata, Psychotria clementis, Psychotria costivenia, Psychotria douarrei, Psychotria glomerata, Psychotria osseana, Psychotria vanhermanii, Rondeletia, Planchonella oxyedra, Saxifraga, Esterhazya sp., Linaria alpina, Tetralix brachypetalus, Tetralix cristalensis, Tetralix jaucoensis, Tetralix moaensis, Tetralix nipensis, Trichospermum kjellbergii, Turnera subnuda, Vellozia sp., Agatea deplanchei, Rinorea javanica, Acer pseudoplatanus, Minuarfia vernai, Polycarpaea synandrai, Cistus incanus ssp. creticus, Armeria maritime var. halleri, Agrostis stolonifera, Agrostis tenuis, Arrhenatherum elatius, Festuca ovina, Rumex acetosa, Viola calaminaria, Pandiaka metallorum, Celosia trigyna, Anisopappus chinensis, Anisopappus davyi, Gutenbergia pubescens, Millotia myosotidifoliab, Vernonia petersii, Minuartia verna ssp. hercynicia, Silene cobalticola, Commelina zigzag, Cyanotis longifolia, Ipomoea alpina, Ascopepis metallorum, Bulbostylis cupricola, Bulbosfylis pseudoperennis, Monadenium cupricola, Phyllanfhus williamioides, Crotalaria cobalticola, Vigna dolomitica, Gladiolus gregarious, Aeollanthus subacaulis var. linearis, Aeollanthus homblei, Aeollanthus saxatilis, Aeollanthus subacaulis var. ericoides* et *var. linearis, Becium grandiflorum var. vanderystii, Haumaniastrum homblei, Haumaniastrum robertii, Haumaniastrum rosulatum, Hibiscus rhodanthus, Abies balsamea, Eragrostis racemosa, Rendlia altera, Sporobolus congoensis, Actiniopteris sp., Alectra sessilifiora var. senegalensis, Buchnera henriquesii, Crepidorhopalon tenuisa, Crepidorhopalon perennisa, Sopubia mannii, Sopubia metallorum, Sopubia neptuniii, Striga hermontheca, Triumfetta dekindtiana, Triumfetta digifata, Triumfetta welwitschii var. descampii, Xerophyta retinewis var. equisetoides, Alyxia rubricaulis, Maytenus bureaviania, Maytenus pancheriana, Maytenus sebertiana, Garcinia amplexicaulis, Eugenia clusioides, Beaupreopsis pan iculata, Macadamia angustifo lia, Macadamia neurophylla, Haplopappus fremontii, Machaeranthera glabriuscula, Machaeranthera ramosa, Machaeranthera venusta, Sfanleya pinnata, Stanleya bipinnata, Atriplex confertifolia, Lecythis ollaria, Acacia cana, Astragalus bisulcatus, Astragalus osterhoutii, Astragalus pattersonii, Astragalus pectinatus, Astragalus racernosus, Neptunia amplexicaulis, Morinda reticulafa* et *Castilleja chromosa.*

26. Procédé selon la revendication 25, dans lequel le au moins un premier métal est le nickel.

27. Procédé selon la revendication 25 ou la revendication 26, dans lequel le pH du sol est réduit par l'addition au sol d'au moins un agent qui résulte en une baisse du pH du sol.

28. Procédé selon la revendication 1, dans lequel la au moins une plante hyperaccumulatrice de métal cultivée dans le sol sous des conditions suffisantes pour permettre à la au moins une plante d'accumuler le au moins un premier métal du sol dans le tissu situé au-dessus du sol est choisie parmi le groupe constitué de *Leucocroton sp., Phyllanthus sp.* et *Psychotria sp*.

29. Procédé selon l'une quelconque des revendications 25 à 27, dans lequel la au moins une plante hyperaccumulatrice de métal est cultivée dans le sol sous des conditions suffisantes pour permettre à la au moins une plante d'accumuler le au moins un premier métal du sol dans le tissu situé au-dessus du sol en une quantité excédant la concentration du au moins un premier métal dans le sol d'un facteur d'au moins 2.

30. Procédé selon la revendication 29, dans lequel la au moins une plante accumule le au moins un premier métal du sol dans le tissu situé au-dessus du sol en une quantité excédant la concentration du au moins un premier métal dans le sol d'un facteur d'au moins 3.

31. Procédé selon la revendication 30, dans lequel la au moins une plante accumule le au moins un premier métal du sol dans le tissu situé au-dessus du sol en une quantité excédant la concentration du au moins un premier métal dans le sol d'un facteur d'au moins 4.

32. Procédé selon la revendication 28, dans lequel au moins une plante hyperaccumulatrice de métal choisie parmi le groupe constitué de *Leucocroton sp., Phyllanthus sp.* et *Psychofria sp.* est cultivée dans le sol sous des conditions suffisantes pour permettre à la au moins une plante d'accumuler le au moins un premier métal du sol dans le tissu situé au-dessus du sol en une quantité excédant la concentration du au moins un premier métal dans le sol d'un facteur d'au moins 2.

33. Procédé selon la revendication 1, dans lequel l'accumulation dudit au moins un premier métal est accompagnée de la récupération d'au moins un second métal.

34. Procédé selon la revendication 33, dans lequel le au moins un second métal est choisi parmi le groupe constitué du nickel, cobalt, manganèse, palladium, rhodium, ruthénium, platine, de l'iridium, osmium, du rhénium et des mélanges de ceux-ci.
